# EUROPÄISCHE PATENTSCHRIFT

(11) **EP 2 528 183 B1**
(45) Veröffentlichungstag und Bekanntmachung des Hinweises auf die Patenterteilung: **02.04.2014**
(21) Anmeldenummer: 11075192.2
(22) Anmeldetag: 12.08.2011
(51) Int. Cl.: H02J 3/28, H02J 4/00, H02J 7/34, H02J 3/38, H02J 3/14, H02J 3/32

(54) **Verfahren und Vorrichtung zur Stromversorgung**
Method and device for energy transfer
Procédé et dispositif d'alimentation en courant

(30) Priorität: 04.03.2011 DE 102011013609; 04.03.2011 DE 202011003799 U
(43) Veröffentlichungstag der Anmeldung: 28.11.2012
(73) Patentinhaber: SBU Photovoltaik GmbH, 16303 Schwedt/Oder (DE)
(72) Erfinder: Bartelt-Muszynski, Sven, 16303 Schwedt (DE)
(74) Vertreter: Kietzmann, Manfred

(56) Entgegenhaltungen:
- DE-A1- 19 630 432
- GB-A- 2 455 421
- US-A1- 2010 313 931
- CHIANG S J ET AL: "Residential Photovoltaic Energy Storage System", IEEE TRANSACTIONS ON INDUSTRIAL ELECTRONICS, IEEE SERVICE CENTER, PISCATAWAY, NJ, USA, Bd. 45, Nr. 3, 1. Juni 1998 (1998-06-01), XP011023380, ISSN: 0278-0046

## Beschreibung

Die Erfindung betrifft die steuernde Beeinflussung von Verbrauchern und Erzeugern von Elektroenergie hinter der juristischen Schnittstelle zum Energieversorger. Insbesondere bezieht sich die Erfindung auf die erneuerbare Elektroenergieerzeugung , wie Windenergie, Solarenergie, Energie aus Biogasanlagen, aus Erdwärme, usw. und den dabei erzeugten Strom, welcher in der Regel netzgekoppelt in das zentrale Energienetz eines Energieversorgers eingespeist wird, weil ein möglicher direkter Verbrauch dieser Elektroenergie durch eigene Verbraucher nicht zu jedem Zeitpunkt garantiert werden kann.

Ein System mit einer optimierten Betriebsweise, das den Energiefluss in Spitzenzeiten zwischen einem zentralen und einem lokalen Netz, das selbst über Stromerzeuger aus erneuerbaren Energiequellen verfügt, wird in der GB 2455421 A beschreiben. Hier wird fehlende Energie aus dem zentralen Netz gezogen und überschüssige Energie an das zentrale Netz abgegeben. Darüberhinaus verfügt das System über Energiespeicher, die sowohl durch Energie aus dem zentralen als auch dem lokalen Netz speisbar sind.

Netzgebundene Photovoltaikanlagen waren in Deutschland und den meisten anderen Ländern bisher nicht konkurrenzfähig. Die Erzeugung von Solarstrom wurde und wird deshalb durch Erneuerbare-Energie-Gesetze gefördert.

Photovoltaikanlagenbetreiber erhalten auf dieser Grundlage eine Einspeisevergütung für die Stromerzeugung in zentrale Energienetze in Größenordnungen, die über den an den Strombörsen gehandelten Strompreisen liegen. Die Stromerzeugungskosten werden auf alle Verbraucher umgelegt.

Mit dem rasanten Zubau an Solaranlagen würden die Kosten für die Verbraucher in nicht mehr tragbare Dimensionen steigen. Deshalb wurde in Deutschland erstmalig 2010 die Solarstromvergütung um 30 % reduziert und soll weiter jährlich abgesenkt werden. Aus der Sicht der Betreiber von Energienetzen wird der Solarstrom dann wettbewerbsfähig, wenn der Energienetzbetreiber Solarstrom billiger an der Strombörse einkaufen kann als herkömmlichen Strom aus Gas, Öl oder Kohle oder aus Atomkraftwerken.

Vor dem Hintergrund dieser Entwicklung und auch den mit der Netzeinspeisung verbundenen Aufwendungen wie Netzwerkeinspeisegeräte, Stromabrechnung, etc. sowie der Amortisation der Kosten für die Solaranlagen, stellt sich für Kleinerzeuger von Solarstrom, die im Wesentlichen über Erzeugungskapazitäten verfügen, die gerade den Eigenbedarf decken, die Frage, ob eine Netzeinspeisung noch sinnvoll ist. Das gilt analog für andere Energieerzeuger, die Strom aus anderen erneuerbaren Energiequellen erzeugen.

Aufgabe der Erfindung ist es deshalb, eine Vorrichtung und ein Verfahren vorzuschlagen, die es den Betreibern von auf erneuerbarer Energie basierenden Energieerzeugungsanlagen ermöglichen, die von diesen Energieanlagen erzeugte Energie ohne den Umweg über ein zentrales Netz zu nutzen. Es soll Energie aus dem zentralen Netz beziehbar sein aber keine Energie in das zentrale Netz abgegeben werden, so dass Netzwerkeinspeisegeräte entfallen. Gelöst wird diese Aufgabe mit den Merkmalen des Verfahrensanspruches 1, eine vorteilhafte Anordnung beschreibt Anspruch 10. Vorteilhafte Ausgestaltungen sind Gegenstand der Unteransprüche.

Erfindungsgemäß wird zur Stromversorgung eines Verbrauchers, der an ein zentrales Energieversorgungsnetz angeschlossen ist und der über eine in das zentrale Energieversorgungsnetz einspeisbare Energiemenge aus erneuerbaren Energiequellen verfügt, vorgeschlagen, dass der Stromverbrauch der aktiven Verbrauchseinheiten des Verbrauchers gemessen wird und die aktiven Verbrauchseinheiten von Stromerzeugern aus erneuerbaren Energiequellen und/oder aus einem Energiespeicher von erneuerbarer Energie direkt versorgt werden, wobei in Abhängigkeit von den gemessenen Stromverbrauchsdaten mittels einer Regeleinheit
a) bei einem gemessenen Mehrverbrauch der aktiven Verbrauchseinheiten gegenüber einem oberen Grenzwert die fehlende Energiemenge durch weiteres Zuschalten von dezentralen Stromerzeugern und/oder aus einem Energiespeicher und/oder aus dem zentralen Energieversorgungsnetz zugeführt wird und/oder der Stromverbrauch des Verbrauchers gedrosselt wird und
b) bei einem gemessenen Stromverbrauch des Verbrauchers unterhalb eines Grenzwertes die Stromabgabe von den Stromerzeugern gedrosselt wird und/oder die überschüssige Energiemenge einem Speicher zugeführt wird und/oder der Stromverbrauch des Verbrauchers erhöht wird,

so dass kein Strom von dezentralen Stromerzeugern aus erneuerbaren Energiequellen und/oder aus einem Energiespeicher ins zentrale Energieversorgungsnetz abgegeben wird.

Verbraucher im hier gebrauchten Sinne ist ein aus stromverbrauchenden Verbrauchseinheiten bestehendes System nach dem Zähler des zentralen Energieversorgungsnetzes, z.B. ein Einfamilienhaus (System) mit Verbrauchseinheiten wie Waschmaschine, Fernsehgeräte, Heizung, Maschinen usw. Der Verbraucher ist gleichzeitig Betreiber der dezentralen Stromerzeuger, d.h. Produzent der Energie. Er wäre somit als Prosumer in einem internen Versorgungsnetz zu charakterisieren.

Bereitstellbare Energiemenge ist die aktuell durch die Stromerzeuger bereitstellbare Energiemenge. Bei einem vorhandenen Speicher kann die bereitstellbare Energiemenge die gespeicherte einschließen.

Bei den Grenzwerten handelt es sich um festgelegte Grenzwerte und/oder die Grenzwerte werden aus der aktuell durch die Stromerzeuger bereitstellbare Energiemenge und wenn vorhanden auch der gespeicherten Energiemenge berechnet oder entsprechen der bereitstellbaren Energiemenge.

Die Einführung von Grenzwerten verschafft dem System eine höhere Flexibilität. Insbesondere das Zu- und/oder Abschalten von Verbrauchseinheiten kann mit zeitlicher Verzögerung erfolgen, vorzugsweise wenn für ein vorgegebenes Zeitfenster der Verbrauchsmesswert den entsprechenden Grenzwert dauerhaft unter- bzw. überschreitet.

Auf die beschriebene Weise wird die Stromversorgung der jeweiligen Verbraucher im vollen Umfange gewährleistet, ohne dass durch die Stromerzeuger bereitgestellter oder bereitstellbarer Strom in das zentrale Energieversorgungsnetz abgegeben wird.

Was auf den ersten Blick unverständlich erscheinen mag, beinhaltet für die Betreiber von auf erneuerbarer Energie basierenden Energieerzeugungsanlagen eine Reihe von Vorteilen.

Den Betreibern wird so ermöglicht, die von diesen Energieanlagen erzeugte Energie ohne den Umweg über ein zentrales Energieversorgungsnetz zu nutzen.

Für Kleinerzeuger von Strom, die im wesentlichen über Erzeugungskapazitäten verfügen, die den Eigenbedarf decken, entfallen so die mit der Netzeinspeisung verbundenen Aufwendungen wie z.B. Netzwerkeinspeisegeräte.

Betreiber von zentralen Energieversorgungsnetzen entfallen als Vertragspartner ebenso wie finanztechnische Abrechnungen usw.

Eine im Garten oder auf einem Garagendach aufgestellte Solaranlage mit einer Leistung von z.B. 2 - 3 KW kann den Eigenbedarf eines Einfamilienhauses zum großen Teil decken.

Jede Kilowattstunde aus der eigenen Energieanlage mindert die Stromrechnung und amortisiert die Anschaffungskosten von gegenwärtig etwa 2000 - 3000 € für eine 2-KW-Photovoltaikanlage.

Der Netzbetreiber eines zentralen Energieversorgungsnetzes hat den Vorteil, dass sein Netz weniger belastet wird.

Durch vorteilhafte Ausgestaltungen lässt sich die Versorgung der Verbrauchseinheiten des Verbrauchers weiter optimieren. So ist vorgesehen, dass die Messeinheit permanent den Stromverbrauch des Verbrauchers erfasst, so dass die Regeleinheit diesen mit der Information über die aktuell durch den Stromerzeuger und/oder den Speicher bereitgestellte Energiemenge abgleichen kann und betriebsbereite Verbrauchseinheiten z.B. eine vorprogrammierte Waschmaschine zur vollständigen Nutzung der bereitgestellten Energiemenge zuschaltet.

Analog können in Abhängigkeit vom Strombezug aus dem zentralen Energieversorgungsnetz Verbrauchseinheiten abgeschaltet werden, so dass die Stromentnahme aus dem zentralen Versorgungsnetz minimiert wird.

Weiter ist vorgesehen, dass eine Sicherheitsschaltung vorhanden ist, die bei einem Ausfall der Messergebnisse an der Messeinrichtung die Verbrauchseinheiten ausgeschaltet und die Stromerzeuger und soweit vorhanden die Energiespeicher vom internen Netz nimmt.

Bei einer Vorrichtung zur Stromversorgung von Verbrauchern, die über ein internes Versorgungsnetz verfügen, das über einen Zähler mit einem zentralen Energieversorgungsnetz verbunden ist und das über eine Wechselrichtereinrichtung mit Stromerzeugern aus erneuerbaren Energiequellen gekoppelt ist, ist vorgesehen, dass nach dem Zähler für die aus dem zentralen Energieversorgungsnetz entnehmbare Energiemenge eine Regeleinheit angeordnet ist, die über eine Messeinrichtung mit den Verbrauchseinheiten und die mit mindestens einem Stromerzeuger aus erneuerbaren Energiequellen und/oder einem dem Stromerzeuger nachgeordneten Energiespeicher verbunden ist, derart, dass durch die Regeleinheit die Versorgung der aktiven Verbrauchseinheiten durch den Stromerzeuger und/oder den Energiespeicher so einstellbar ist, dass kein Strom von Stromerzeugern aus erneuerbaren Energiequellen und/oder aus einem Energiespeicher ins zentrale Energieversorgungsnetz abgegeben wird.

Dazu wird in Abhängigkeit von den von der Messeinrichtung gemessenen Stromverbrauchsdaten mittels der Regeleinheit bevorzugt
a) bei einem gemessenen Mehrverbrauch der aktiven Verbrauchseinheiten gegenüber einem oberen Grenzwert die fehlende Energiemenge durch Zuschalten weitere dezentraler Stromerzeuger und/oder aus einem Energiespeicher und/oder aus dem zentralen Energieversorgungsnetz zugeführt und/oder der Stromverbrauch des Verbrauchers wird gedrosselt
   und
b) bei einem gemessenen Stromverbrauch des Verbrauchers unterhalb eines Grenzwertes die Stromabnahme von den Stromerzeugern gedrosselt und/oder die überschüssige Energiemenge wird einem Speicher zugeführt und/oder der Stromverbrauch des Verbrauchers wird erhöht.

In einer vorteilhaften Ausführung verfügt die Regeleinrichtung über eine Verzögerungsschaltung, so dass das Zu- und/ Abschalten von Verbrauchseinheiten mit zeitlicher Verzögerung erfolgen kann, vorzugsweise wenn für ein vorgegebenes Zeitfenster der Verbrauchsmesswert den entsprechenden Grenzwert dauerhaft unter- bzw. überschritten wird.

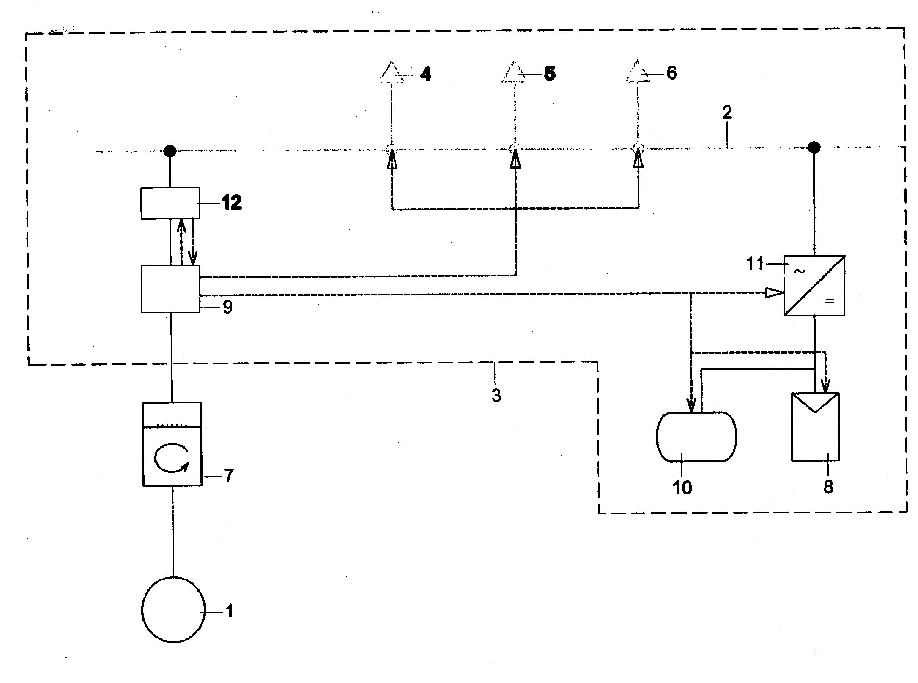

Der grundsätzliche Aufbau der Stromversorgung ist in der Zeichnung dargestellt.

Die Vorrichtung zur Stromversorgung von Verbrauchern 3 verfügt über ein internes Versorgungsnetz 2, das über einen Zähler 7 mit einem zentralen Energieversorgungsnetz 1 verbunden ist und das über eine Wechselrichtereinrichtung 11 mit Stromerzeugern 8 aus erneuerbaren Energiequellen gekoppelt ist.

Nach dem Zähler 7 für die aus dem zentralen Energieversorgungsnetz 1 entnehmbare Energiemenge ist eine Regeleinheit 9 angeordnet, die über eine Messeinrichtung 12 mit den Verbrauchseinheiten 4, 5, 6 und die mit mindestens einem Stromerzeuger 8 aus erneuerbaren Energiequellen und/oder einem dem Stromerzeuger 8 nachgeordneten Energiespeicher 10 verbunden ist.

Durch die Regeleinheit 9 ist die Versorgung der aktiven Verbrauchseinheiten 4, 5, 6 durch den Stromerzeuger 8 und/oder den Energiespeicher 10 einstellbar, wobei die Messeinheit 12 permanent den Stromverbrauch des Verbrauchers 3 erfasst.

Das Einstellen der Versorgung geschieht in einer Ausführung auf folgende Art und Weise:

Der Strombedarf der aktiven Verbrauchseinheiten 4, 5, 6 wird gemessen und die aktiven Verbrauchseinheiten 4, 5, 6 werden von den Stromerzeugern 8 aus erneuerbaren Energiequellen und/oder aus dem Energiespeicher 10 mit Energie direkt versorgt.

Stellt die Messeinheit 12 und damit die Regeleinheit 9 einen Mehrverbrauch der aktiven Verbrauchseinheiten 4, 5, 6 gegenüber der durch die Stromerzeuger 8 und den Energiespeicher 10 bereitstellbaren Energiemenge fest, wird die fehlende Energiemenge durch das Zuschalten von weiteren dezentralen Stromerzeugern, soweit vorhanden, und/oder aus dem zentralen Energieversorgungsnetz 1 zugeführt. Natürlich ist es auch möglich, zur Reduzierung des Strombezuges aus dem zentralen Energieversorgungsnetz 1 Verbrauchseinheiten 4, 5, 6 abzuschalten.

Bei einem festgestellten Minderverbrauch der aktiven Verbrauchseinheiten 4, 5, 6 gegenüber der durch die Stromerzeuger 8 bereitgestellten Energiemenge wird die Stromabnahme von den Stromerzeugern 8 gedrosselt und/oder die überschüssige Energiemenge wird dem Energiespeicher 10 zugeführt und/oder der Stromverbrauch des Verbrauchers 3 wird durch Zuschalten einer betriebsbereiten Verbrauchereinheit 4, 5, 6 erhöht.

Für einen optimierten Betrieb des Systems ist vorgesehen, das Grenzwerte festgelegt oder berechnet werden, nämlich ein Grenzwert für den Mindestverbrauch und ein erlaubter Grenzwert für den Maximalverbrauch.

Wird der Mindestverbrauchsgrenzwert unterschritten, werden suxessiv erst Verbrauchseinheiten 4, 5, 6 zugeschaltet und dann erst der Stromerzeuger 8 gedrosselt oder abgeschaltet. Ist der Gesamtverbrauch größer als der obere Grenzwert, werden erst Stromerzeuger 8 zugeschaltet und erst danach Verbrauchseinheiten 4, 5, 6 abgeschaltet, bis der Grenzwert unterschritten wird.

Sind keine Verbrauchseinheiten 4, 5, 6 mehr abschaltbar muss auf das zentrale Energieversorgungsnetz 1 zurückgegriffen werden.

Von Vorteil ist es deshalb, wenn die Stromerzeugungskapazität der Stromerzeuger 8 dem vorrausichtlichen Bedarf der angeschlossenen Verbrauchseinheiten 4, 5, 6 des Verbrauchers 3 angepasst ist, vorzugsweise etwas höher ausgelegt ist.

Weiter ist vorgesehen, dass die Messeinrichtung 12 und/oder die Regeleinrichtung 9 über eine Sicherheitsschaltung verfügt, die bei einem Ausfall der Messergebnisse an der Messeinrichtung 12 ein Ausschalten der Verbrauchseinheiten 4, 5, 6 und die Abkopplung der Stromerzeuger 8 und soweit vorhanden der Energiespeicher 10 vom internen Netz 2 bewirkt.

Als eine Alternative zum Zu- oder Abschalten von Verbrauchseinheiten 4, 5, 6 mittels der Regeleinheit 9 können Verbrauchseinheiten 4, 5, 6 auch zeitabhängig zu- oder abschaltbar betreibbar sein.

### Bezugszeichenliste

- 1: zentrales Energieversorgungsnetz
- 2: internes Versorgungsnetz
- 3: Verbraucher
- 4: Verbrauchseinheit
- 5: Verbrauchseinheit
- 6: Verbrauchseinheit
- 7: Zähler
- 8: Stromerzeuger aus erneuerbaren Energiequellen
- 9: Regeleinheit
- 10: Energiespeicher
- 11: Wechselrichtereinrichtung
- 12: Messeinrichtung (-en)

## Patentansprüche

1. Verfahren zur Stromversorgung eines Verbrauchers (3), der an ein zentrales Energieversorgungsnetz (1) angeschlossen ist, der über eine Energiemenge, die von Stromerzeugern (8) aus erneuerbaren Energiequellen und/oder aus einem Energiespeicher (10) bereitgestellt wird, verfügt und dessen aktive Verbrauchseinheiten (4, 5, 6) aus dieser Energiemenge direkt versorgt werden, wobei der Stromverbrauch der aktiven Verbrauchseinheiten (4, 5, 6) des Verbrauchers (3) gemessen wird und wobei in Abhängigkeit von den gemessenen Stromverbrauchsdaten mittels einer Regeleinheit (9) bei einem gemessenen Mehrverbrauch der aktiven Verbrauchseinheiten (4, 5, 6) gegenüber einem oberen Grenzwert die fehlende Energiemenge aus dem zentralen Energieversorgungsnetz (1) zugeführt wird, **dadurch gekennzeichnet dass**,
bei einem gemessenen Stromverbrauch des Verbrauchers (3) unterhalb eines Grenzwertes die Stromabnahme von den Stromerzeugern (8) gedrosselt und/oder der Stromverbrauch des Verbrauchers (3) erhöht wird, so dass die Stromversorgung des Verbrauchers (3) im vollen Umfange durch die Stromerzeuger (8) gewährleistet wird aber keine in das zentrale Energieversorgungsnetz (1) einspeisbare Energiemenge zur Verfügung steht.

2. Verfahren nach Anspruch 1, **dadurch gekennzeichnet, dass**
bei einem gemessenen Mehrverbrauch der aktiven Verbrauchseinheiten (4, 5, 6) gegenüber einem oberen Grenzwert der Stromverbrauch des Verbrauchers (3) gedrosselt wird und/oder ein weiteres Zuschalten von dezentralen Strömerzeugern erfolgt.

3. Verfahren nach Anspruch 1 oder 2, **dadurch gekennzeichnet, dass**
bei einem gemessenen Stromverbrauch des Verbrauchers (3) unterhalb eines Grenzwertes vor der Drosselung der Stromabnahme von den Stromerzeugern (8) die überschüssige Energiemenge dem Energiespeicher (10) zugeführt wird.

4. Verfahren nach einem der Ansprüche 1 bis 3, **dadurch gekennzeichnet, dass**
die Grenzwerte festgelegte Grenzwerte sind oder die Grenzwerte aus der aktuell durch die Stromerzeuger (8) bereitstellbaren Energiemenge und wenn vorhanden auch der gespeicherten Energiemenge berechnet werden oder dieser entsprechen.

5. Verfahren nach einem der Ansprüche 1 bis 4, **dadurch gekennzeichnet, dass**
die Messeinheit (12) permanent den Stromverbrauch des Verbrauchers (3) erfasst.

6. Verfahren nach einem der Ansprüche 1 bis 5, **dadurch gekennzeichnet, dass**
die Stromverbrauchserhöhung durch das Zuschalten von betriebsbereiten Verbrauchseinheiten (4, 5, 6) des Verbrauchers (3) erfolgt.

7. Verfahren nach einem der Ansprüche 1 bis 6, **dadurch gekennzeichnet, dass**
das Zu- und/oder Abschalten von Verbrauchseinheiten (4, 5. 6) mit zeitlicher Verzögerung erfolgt, vorzugsweise wenn für ein vorgegebenes Zeitfenster der Verbrauchsmesswert den entsprechenden Grenzwert dauerhaft unter- bzw. überschreitet.

8. Verfahren nach einem der Ansprüche 1 bis 7, **dadurch gekennzeichnet, dass**
bei einem Ausfall der Messergebnisse an der Messeinrichtung (12) die Verbrauchseinheiten (4, 5, 6) ausgeschaltet und die Stromerzeuger (8) und soweit vorhanden die Energiespeicher (10) vom internen Netz (2) genommen werden.

9. Verfahren nach einem der Ansprüche 1 bis 8, **dadurch gekennzeichnet, dass**
die Stromerzeugungskapazität der Stromerzeuger (8) bei der Projektierung dem vorrausichtlichen Bedarf der angeschlossenen Verbrauchseinheiten (4, 5, 6) angepasst wird, vorzugsweise etwas höher ausgelegt ist.

10. Vorrichtung zur Stromversorgung von Verbrauchern (3), die über ein internes Versorgungsnetz (2) verfügen, das über einen Zähler (7) mit einem zentralen Energieversorgungsnetz (1) verbunden ist und das über eine Wechselrichtereinrichtung (11) mit Stromerzeugern (8) aus erneuerbaren Energiequellen gekoppelt ist, wobei nach dem Zähler (7) für die aus dem zentralen Energieversorgungsnetz (1) entnehmbare Energiemenge eine Regeleinheit (9) angeordnet ist, die über eine Messeinrichtung (12) mit den Verbrauchseinheiten (4, 5, 6) und die mit mindestens einem Stromerzeuger (8) aus erneuerbaren Energiequellen und/oder einem dem Stromerzeuger (8) nachgeordneten Energiespeicher (10) verbunden ist, **dadurch gekennzeichnet, dass**
die Regeleinheit (9) mit den Verbrauchseinheiten (4, 5, 6) derart gekoppelt ist, dass diese durch Signale der Regeleinheit (9) in Abhängigkeit von der aktuell durch die Stromerzeuger (8) und/oder den Energiespeicher (10) bereitgestellte Energiemenge ein-oder ausschaltbar oder im Stromverbrauch drosselbar sind und
die Messeinrichtung (12) oder die Regeleinrichtung (9) über eine Sicherheitsschaltung verfügt, durch die bei einem Ausfall der Messergebnisse an der Messeinrichtung (12) ein Ausschalten der Verbrauchseinheiten (4, 5, 6) und die Abkopplung der Stromerzeuger (8) und soweit vorhanden der Energiespeicher (10) vom internen Netz (2) bewirkbar ist.

11. Vorrichtung nach Anspruch 10, **dadurch gekennzeichnet, dass**
die Regeleinrichtung (9) über eine Verzögerungsschaltung verfügt, so dass das Zu-und/oder Abschalten von Verbrauchseinheiten (4, 5. 6) mit zeitlicher Verzögerung erfolgt, vorzugsweise wenn für ein vorgegebenes Zeitfenster der Verbrauchsmesswert den entsprechenden Grenzwert dauerhaft unter- bzw. überschreitet.

12. Vorrichtung nach Anspruch 10 oder 11, **dadurch gekennzeichnet, dass**
Verbrauchseinheiten (4, 5, 6) zeitabhängig zu- oder abschaltbar betreibbar sind.

## Claims

1. A method for supplying power to a consumer (3) who is connected to a central energy supply network (1), who has an amount of energy at his disposal that is provided by power generators (8) from renewable energy sources and/or from an energy storage facility (10), and whose active consumption units (4, 5, 6) are directly supplied from this amount of energy, wherein the power consumption of the active consumption units (4, 5, 6) of the consumer (3) is measured and, based on the power consumption data measured, a control unit (9) supplies any missing amount of energy from the central energy supply network (1) if additional consumption by the active consumption units (4, 5, 6) is measured relative to an upper limit, **characterized in that**,
if the consumer's (3) measured power consumption is below a limit, power draw from the power generators (8) is cut back and/or the power consumption of the consumer (3) is increased to the point that the power supply to the consumer (3) is fully ensured by the power generators (8) but no amount of energy is available that can be fed back into the energy supply network (1).

2. The method according to claim 1, **characterized in that**
the consumer's (3) power consumption is cut back or other decentralized power generators are added if additional consumption of the active consumption units (4, 5, 6) relative to an upper limit is measured.

3. The method according to claim 1 or 2, **characterized in that**
the excess amount of energy is fed into the energy storage facility (10) before the power draw from the power generators (8) is cut back if the consumer's (3) measured power consumption is below a limit.

4. The method according to any one of claims 1 to 3, **characterized in that**
the limits are determined limits or the limits are calculated from, or correspond to, the actual amount of energy that can be supplied by the power generators (8) and the stored amount of energy, if any.

5. The method according to any one of claims 1 to 4, **characterized in that**
the measuring unit (12) permanently records the power consumption of the consumer (3).

6. The method according to any one of claims 1 to 5, **characterized in that**
power consumption is increased by adding consumption units (4, 5, 6) of the consumer (3) that are ready for service.

7. The method according to any one of claims 1 to 6, **characterized in that**
consumption units (4, 5, 6) are switched on and/or off with a time delay, preferably when the measured consumption stably falls below or exceeds the respective limit within a preset time window.

8. The method according to any one of claims 1 to 7, **characterized in that**
the consumption units (4, 5, 6) are switched off and the power generators (8) and energy storage facilities (10), if any, are disconnected from the internal network (2) if the measuring unit (12) fails to provide results of measurement.

9. The method according to any one of claims 1 to 8, **characterized in that**
the power generation capacity of the power generators (8) is dimensioned based on the expected need of the connected consumption units (4, 5, 6) in the planning stage, preferably somewhat higher.

10. A device for supplying power to consumers (3) who have an internal supply network (2) that is connected via a meter (7) to a central energy supply network (1) and coupled to power generators (8) from renewable energy sources via a power inverter facility (11), wherein a control unit (9) is provided downstream of the meter (7) for the amount of energy that can be taken from the central energy supply network (1), said control unit (9) being connected via a measuring unit (12) to the consumption units (4, 5, 6) and to at least one power generator (8) from renewable energy sources and/or a downstream energy storage facility (10), **characterized in that**
the control unit (9) is coupled with the consumption units (4, 5, 6) such that these can be switched on or off or their power consumption can be cut back by signals from the control unit (9) depending on the actual amount of energy supplied by the power generators (8) and/or the energy storage facility (10) and
the measuring unit (12) or the control unit (9) includes a safety circuit that can cause the consumption units (4, 5, 6) to be switched off and the power generators (8) and the energy storage facility (10), if any, to be disconnected from the internal network (2) if the measuring unit (12) fails to provide results of measurement.

11. The method according to claim 10, **characterized in that**
the control unit (9) includes a delay circuit, such that the consumption units (4, 5, 6) are switched on and/or off with a time delay, preferably when the measured consumption stably falls below or exceeds the respective limit within a preset time window.

12. The method according to claim 10 or 11, **characterized in that**
consumption units (4, 5, 6) can be actuated to be switched on or off as a function of time.

## Revendications

1. Procédé d'alimentation électrique d'un consommateur (3) qui est connecté à un réseau central d'alimentation en énergie (1) et qui dispose d'une quantité d'énergie qui est fournie par des génératrices électriques (8) à partir de sources d'énergie renouvelables et/ou à partir d'un accumulateur d'énergie (10), et dont les unités de consommation actives (4, 5, 6) sont alimentées directement à partir de cette quantité d'énergie, la consommation électrique des unités de consommation actives (4, 5, 6) du consommateur (3) étant mesurée, et la quantité d'énergie manquante étant, au moyen d'une unité de régulation (9), acheminée à partir du réseau central d'alimentation en énergie (1) en fonction des données de consommation électrique mesurées dans le cas d'un surcroît de consommation mesuré des unités de consommation actives (4, 5, 6) par rapport à une valeur limite supérieure, **caractérisé en ce que**,
dans le cas d'une consommation mesurée du consommateur (3) au-dessous d'une valeur limite, le prélèvement de courant des génératrices électriques (8) est restreint et/ou la consommation de courant du consommateur (3) est augmentée, de telle sorte que l'alimentation électrique du consommateur (3) est assurée en totalité par les génératrices électriques (8) mais qu'aucune quantité d'énergie pouvant être introduite dans le réseau central d'alimentation en énergie (1) n'est disponible.

2. Procédé selon la revendication 1, **caractérisé en ce que**,
dans le cas d'un surcroît de consommation mesuré des unités de consommation actives (4, 5, 6) par rapport à une valeur limite supérieure, la consommation électrique du consommateur (3) est restreinte et/ou une autre connexion de génératrices électriques décentralisées est effectuée.

3. Procédé selon la revendication 1 ou 2, **caractérisé en ce que**,
dans le cas d'une consommation électrique mesurée du consommateur (3) au-dessous d'une valeur limite, la quantité d'énergie en excès est conduite à l'accumulateur d'énergie (10) par les génératrices électriques (8) avant la restriction du prélèvement de courant.

4. Procédé selon une des revendications 1 à 3, **caractérisé en ce que**
les valeurs limites sont des valeurs limites stipulées, ou bien les valeurs limites sont calculées à partir de la quantité d'énergie pouvant être fournie actuellement par les génératrices électriques (8) et, s'il y a lieu, également à partir de la quantité d'énergie accumulée, ou bien les valeurs limites correspondent à cette quantité d'énergie.

5. Procédé selon une des revendications 1 à 4, **caractérisé en ce que**
l'unité de mesure (12) enregistre constamment la consommation électrique du consommateur (3).

6. Procédé selon une des revendications 1 à 5, **caractérisé en ce que**
l'augmentation de consommation électrique s'effectue par la connexion d'unités de consommation actives (4, 5, 6) du consommateur (3) prêtes à fonctionner.

7. Procédé selon une des revendications 1 à 6, **caractérisé en ce que**
la connexion et/ou la déconnexion d'unités de consommation actives (4, 5, 6) s'effectue avec une temporisation, de préférence quand, pendant une fenêtre de temps prédéfinie, la valeur de mesure de la consommation passe durablement au-dessous ou respectivement au-dessus de la valeur limite correspondante.

8. Procédé selon une des revendications 1 à 7, **caractérisé en ce que**,
en cas de défaillance des résultats de mesure sur le dispositif de mesure (12), les unités de consommation actives (4, 5, 6) sont mises hors circuit et les génératrices électriques (8) et, s'il y a lieu, les accumulateurs d'énergie (10) sont déconnectés du réseau interne (2).

9. Procédé selon une des revendications 1 à 8, **caractérisé en ce que**
la capacité de génération de courant des génératrices électriques (8) est, lors des études, adaptée au besoin probable des unités de consommation actives (4, 5, 6) connectées, et est de préférence définie à une valeur légèrement plus élevée.

10. Dispositif d'alimentation électrique de consommateurs (3) qui disposent d'un réseau d'alimentation (2) interne qui est raccordé par le biais d'un compteur (7) à un réseau central d'alimentation en énergie (1) et qui est couplé via un dispositif d'onduleur (11) à des génératrices électriques (8) à partir de sources d'énergie renouvelables, une unité de régulation (9) étant disposée en aval du compteur (7) pour la quantité d'énergie pouvant être prélevée à partir du réseau central d'alimentation en énergie (1) et étant raccordée par le biais d'un dispositif de mesure (12) aux unités de consommation actives (4, 5, 6) et étant raccordée à au moins une génératrice électrique (8) à partir de sources d'énergie renouvelables et/ou à un accumulateur d'énergie (10) en aval de la génératrice électrique (8), **caractérisé en ce que**
l'unité de régulation (9) est couplée aux unités de consommation (4, 5, 6) de telle sorte que celles-ci peuvent être mises en circuit ou hors circuit par des signaux de l'unité de régulation (9) en fonction de la quantité d'énergie fournie actuellement par les génératrices électriques (8) et/ou par l'accumulateur de courant (10), ou bien ces unités de consommation peuvent être restreintes dans la consommation de courant et
le dispositif de mesure (12) ou l'unité de régulation (9) dispose d'un circuit de sécurité qui, en cas de défaillance des résultats de mesure sur le dispositif de mesure (12), peut provoquer une mise hors circuit des unités de consommation actives (4, 5, 6) et le découplage des génératrices électriques (8) et, s'il y a lieu, des accumulateurs d'énergie (10) par rapport au réseau interne (2).

11. Dispositif selon la revendication 10, **caractérisé en ce que**
l'unité de régulation (9) dispose d'un circuit à retard de telle sorte que la connexion et/ou la déconnexion d'unités de consommation actives (4, 5, 6) s'effectue avec une temporisation, de préférence quand, pendant une fenêtre de temps prédéfinie, la valeur de mesure de la consommation passe durablement au-dessous ou respectivement au-dessus de la valeur limite correspondante.

12. Dispositif selon la revendication 10 ou 11, **caractérisé en ce que**
des unités de consommation actives (4, 5, 6) peuvent fonctionner de façon à pouvoir être connectées ou déconnectées en fonction du temps.
